Europäisches Patentamt

(19) European Patent Office

Office européen des brevets

(11) Publication number: **0 174 733 B1**

# EUROPEAN PATENT SPECIFICATION

(45) Date of publication of patent specification: **03.06.92**  (51) Int. Cl.⁵: **H02G 3/28**, **H01R 29/00**

(21) Application number: **85305629.9**

(22) Date of filing: **08.08.85**

(54) Wall system with multicircuit electrical system.

(30) Priority: **10.08.84 US 639970**

(43) Date of publication of application:
**19.03.86 Bulletin  86/12**

(45) Publication of the grant of the patent:
**03.06.92 Bulletin  92/23**

(84) Designated Contracting States:
**AT BE CH DE FR GB IT LI LU NL SE**

(56) References cited:
FR-A- 2 315 786         US-A- 3 832 503
US-A- 4 108 523         US-A- 4 367 370
US-A- 4 370 008         US-A- 4 377 724
US-A- 4 382 648

(73) Proprietor: **HAWORTH, INC.**
**One Haworth Center 1400 Highway M-40**
**Holland Michigan 49423(US)**

(72) Inventor: **Wilson, Harold Robert**
**1384 Natchez**
**Holland, Michigan 49423(US)**
Inventor: **Nestell, David E.**
**834 Ballard Street**
**Grand Rapids Michigan(US)**

(74) Representative: **Jackson, David Spence et al**
**REDDIE & GROSE 16, Theobalds Road**
**London, WC1X 8PL(GB)**

## Description

US-A-4 367 370, owned by the assignee of this application, discloses a wall system formed from a plurality of series-connected electrically prewired panels, and more specifically to a wall system wherein power-taps such as for light fixtures and conventional electrical receptacles can be selectively positioned on the panels and selectively switchably connected, at their point of use, to any one of a plurality of different electrical circuits. The wall system of the aforesaid panel is provided with a five-wire electrical system (three live, one neutral, and one ground wire) which defines three different electrical circuits extending along the wall system. A switchable power-tap is removably connected to a power block or terminal associated with the panels to permit circuit selection at the point of use. The power-tap is provided with a plug-in connection for engagement with the power block or terminal. Irrespective of which circuit the power-tap is connected to, however, the power-tap always connects to the same "neutral" wire since the power-tap permits selection only between the three different "live" wires.

Thus, US-A-4 367 370 discloses a wall panel having fixedly mounted thereon, and disposed between its opposite wall surfaces, an electrical terminal with a connector portion which includes an array of electrical contacts each connected to a corresponding conductor in electrical cabling in the panel, which cabling includes a plural number of live conductors, a neutral conductor and a ground conductor, and a small portable power-tap unit releasably joined to a connector portion of the terminal and arranged to receive power, through contacts engageable with contacts of the terminal, from a selected one only of the live conductors and to supply a circuit or device disposed externally of the panel.

Such a wall panel is according to the invention, characterised in that: the cabling includes the said plural number of neutral conductors, each neutral conductor being associated with a respective live conductor; the array of contacts includes, in addition to the live contacts for the live conductors and a ground contact, the said plural number of neutral contacts, one for each neutral conductor; the power-tap unit has, in addition to a ground contact, only a single live contact and only a single neutral contact; and the live contact and neutral contact are located on an insulating carrier which is displaceable laterally in the power-tap unit when the latter is disengaged from the terminal, the arrangement of the single live and neutral contacts in the carrier in relation to the arrangement of the contacts in the array in the connector portion of the terminal being such that in predetermined positions of the carrier the live and neutral contacts of the power-tap unit register with and engage one selected live contact and the corresponding selected neutral contact respectively in the array in the connector portion when the power-tap unit is joined to the connector portion.

The said plural number may be three so that the electrical system is a seven-wire system formed by three live, three neutral and one ground wires. Each of the three circuits as defined by a respective one of the "live" wires has a dedicated "neutral". This thus significantly minimizes the noise or intermittent current as transmitted over the "neutral", such as due to phase shifting caused by inductive loads when several circuits share a common neutral, and hence makes the system more desirable for use with sensitive equipment such as computers and the like.

The power-tap, which in a preferred form comprises a conventional receptacle unit, is provided solely with three contacts as prongs which create a plug-in type connection with the respective panel-mounted power block. These three contacts, as is conventional, constitute the "live", "neutral" and "ground". However, the "live" and "neutral" contacts, while being electrically isolated from one another, are mounted on the common insulating carrier which itself is movably, preferably slidably, mounted on the power-tap housing. This carrier and the "live" and "neutral" contacts mounted thereon can hence be manually slidably displaced into three discrete positions which correspond to the three circuits defined in the power block. The carrier can be movably displaced only when the power-tap is disconnected from the power block. By initially positioning the carrier in one of the three available positions, the "live" and "neutral" contacts of the power-tap can be electrically engaged with any one of the selected circuits associated with the power block.

The invention will now be further described in more detail by way of example with reference to the drawings, in which:

Figure 1 is a perspective view illustrating a wall system formed from two series-connected panels which are electrically prewired.

Figure 2 is an enlarged, fragmentary side view illustrating the prewired raceway, with cover removed, as associated with the lower edge of the panel.

Figure 3 is a top view of the electrical raceway structure of Figure 2.

Figure 4 is a cross-sectional view through the bottom raceway and illustrating the cover arrangement.

Figure 5 is a perspective view illustrating the primary components which make up the electrical system.

Figure 6 is an enlarged front elevational view of the power-tap unit, specifically a receptacle unit, as taken substantially along line VI-VI in Figure 7.

Figure 7 is a sectional view taken substantially along line VII-VII in Figure 6.

Figure 8 is a fragmentary elevational view illustrating the rear side of the power-tap.

Figure 9 is a sectional view taken substantially along line IX-IX in Figure 6.

Certain terminology will be used in the following description for convenience in reference only, and will not be limiting. For example, the words "upwardly", "downwardly", "leftwardly" and "rightwardly" will refer to directions in the drawings to which reference is made. The words "inwardly" and "outwardly" will refer to directions toward and away from, respectively, the geometric center of the panel and designated components. Said terminology will include the words specifically mentioned, derivatives thereof, and words of similar import.

## DETAILED DESCRIPTION

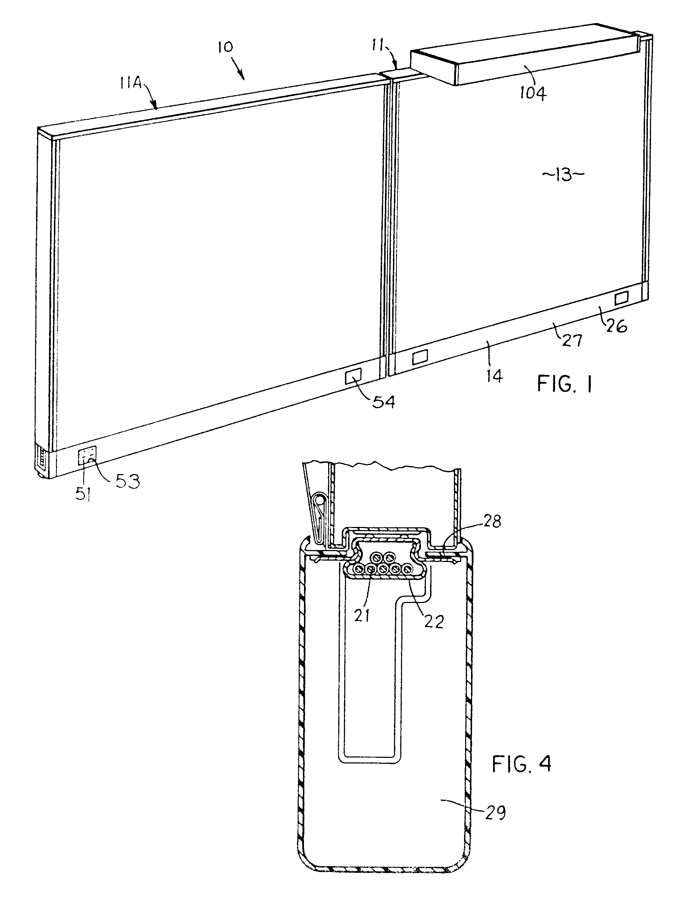

Figure 1 illustrates a wall system 10 formed from a series of interconnected upright prefabricated panels, only two substantially identical panels 11 and 11A being illustrated. Panels of different lengths can be serially interconnected.

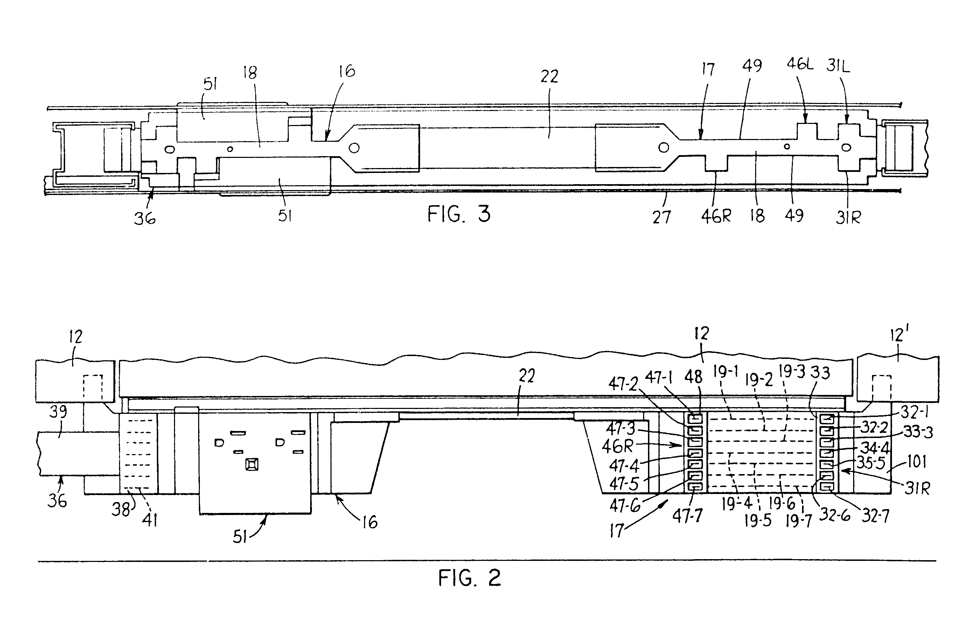

Each panel, such as panel 11A, includes an internal rigid rectangular frame formed by parallel top and bottom rails rigidly joined together by parallel side rails, the bottom rail 12 and side rails 12' being partially illustrated in Figure 2. These rails are of channel-shaped configuration and open inwardly of the panel, whereby the frame confines therein a suitable core structure, such as a honeycomb layer or similar conventional structure. The core and frame are normally sandwiched between thin facing sheets disposed on opposite sides of the frame, which sheets in turn are normally covered by a suitable fabric, the latter defining the exterior side surfaces 13 of the panel. The structure of panel 11 is well known, and one such structure is disclosed in U.S. Patent No. 4 060 294, which patent also discloses the L-shaped plastic hinge used for hingedly connecting the adjacent vertical edges of two panels together.

The panel 11 (as well as panel 11A) is provided with a prewired electrical system 14 extending longitudinally along the lower edge thereof, which system includes identical power blocks or terminals 16 and 17 disposed adjacent the opposite lower corners of the panel, as illustrated in Figure 2. The power blocks 16 and 17 each include a blocklike housing 18 constructed of an electrically insulative material and supporting therein a plurality of electrically conductive plates 19 which are electrically insulated from one another. The system of this invention comprises a seven-wire system, and hence each power block mounts therein seven electrically conductive plates which are only diagrammatically illustrated in Figure 2 and are designated as 19-1 through 19-7. The seven conductive plates 19 of power blocks 16 and 17 are individually electrically connected by seven wire conductors 21 which extend between the power blocks 16 and 17. These conductors 21 extend through an elongated closed channel 22, the latter being fixedly but releasably connected to the underside of the bottom frame rail 12.

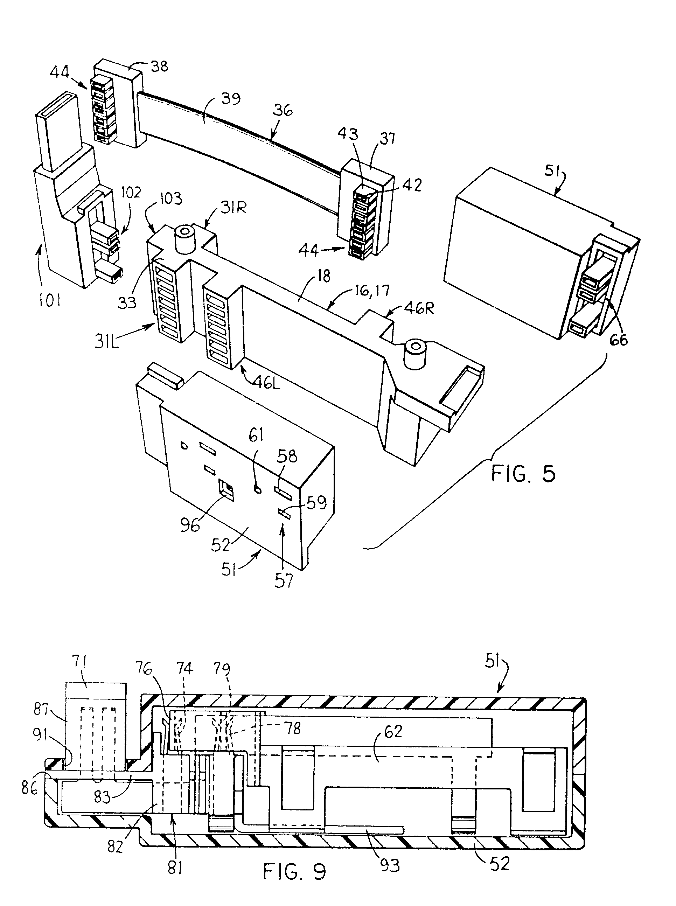

A raceway 26 is defined along the horizontally extending lower edge of the panel 11 so as to enclose the power system 14 therein. The raceway 26 is formed by a pair of substantially identical side covers 27 which cooperate with one another and with the bottom rail 12 to define a closed channel 29 substantially as illustrated in Figure 4. These covers 27 are, in the illustrated embodiment, formed substantially as an integral upwardly opening channel having tabs 28 at the upper ends for fixedly but releasably securing the channel to the panel, which tabs can be released so that either cover can be flexed outwardly and downwardly to provide access to the channel 29, which channel accommodates communication cables and the like.

Each power block 16 and 17 has a pair of identical connector portions 31 associated therewith, which portions face outwardly toward opposite sides of the power block and are identified as 31R and 31L for purposes of identification. The pair of connector portions 31 are disposed adjacent the outer end of the power block so as to be located closely adjacent the respective side edge of the panel. Each connector portion 31 includes a set of seven conductive blades or prongs 32 which project sidewardly of the power block. The seven prongs 32 are designated as 32-1 through 32-7 and are electrically and integrally joined to the conductive plates 19-1 through 19-7, respectively. Each conductive blade or prong 32 is suitably surrounded by a protective shroud 33 which effectively comprises a tubular sidewall of rectangular configuration. The shrouds associated with the seven conductors 32 are effectively integrally joined together as illustrated by Figures 2 and 5. These shrouds 33 extend outwardly slightly beyond the free ends of the conductors 32 to prevent accidental human contact therewith.

The three conductive plates 19-1 through 19-3, and the associated blades 32-1 through 32-3, define the three "live" conductors, whereas the three conductive plates 19-5 through 19-7 and the associated blades 32-5 through 32-7 define the three "neutral" conductors, one each of the latter being dedicated for association with a selected one of the "live" conductors. The remaining conductive plate 19-4, and its blade 32-4, functions as the ground.

To electrically interconnect adjacent panels such as 11 and 11A, the adjacent power blocks (such as the power block 16 on panel 11 and the adjacent power block on panel 11A) are electrically joined by a flexible electrical connector 36 as indicated in Figures 2 and 5. This connector 36 includes a pair of rigid insulative housing parts 37 and 38 which are joined together by an intermediate flexible hinge portion 39, the latter being effectively formed as a substantially flat but flexible strap which can be readily hinged in a horizontal plane so as to accommodate and permit the desired angular relationship between adjacent serially connected panels. A plurality, here seven, of electrical wires extend through the hinge part 36 and terminate in a plurality, here seven, of electrical conductors 41 as associated with each housing part 37-38. Each of these conductors 41 has a pronglike conductive contact 42 (Figure 5) which projects sidewardly of the housing, with the seven contacts 42 being vertically spaced apart and individually surrounded by a substantially rectangular sleevelike shroud 43. The contacts 42 and surrounding shrouds 43 define a plug-in connector portion 44 which is designed to plug into the connector portions 31 to electrically connect the seven-wire system from panel to panel. This flexible connector 36 can be plugged into the connectors 31 of adjacent power blocks from either side of the serially-connected panels, and two such connectors can be plugged into opposite sides of a single power block to permit a single panel to be electrically joined to two adjacent panels to form a "T" or "Y" connection. The connectors 36 are positioned directly under and substantially between the panel sidewalls.

Each power block 16-17 also has a further pair of connector portions 46 (designated 46R and 46L for identification purposes) associated with the opposite sides thereof, which connector portions are identical but are longitudinally staggered or offset relative to one another. Each connector portion 46 includes a set of seven vertically spaced conductive prongs or contacts 47-1 through 47-7 projecting outwardly from the side of the power block housing, which contacts are integral with and respectively associated with the conductive plates 19-1 through 19-7. Each contact 47 is surrounded by a sleevelike shroud 48 which is of a substantially rectangular tubular cross section. The shrouds 48 of the seven contacts 47 have the sidewalls thereof vertically merged together, and the shrouds share a common horizontal wall as located between vertically adjacent contacts substantially as illustrated by Figure 2, whereby the shroud on the connector portion 46 is identical to that associated with the connector portion 31. Each power block 16-17 defines a substantially flat vertical sidewall 49 which extends horizontally along the power block for a substantial distance directly adjacent the connector portion 46, which sidewall 49 is spaced inwardly a substantial distance from the side cover 27 so as to define a substantial region therebetween for accommodating a power-tap unit, such as a receptacle unit, as explained hereinafter.

Referring now to Figure 5, there is illustrated a power-tap unit 51 of this invention, specifically a receptacle unit, which can be plugged into one or both sides of each power block 16 and 17, whereby receptacle units can be positioned along the wall system at desired locations on either side thereof. This receptacle unit 51, as illustrated by Figures 2 and 3, is positionable within the raceway passage 29 directly adjacent the power block sidewall 49. The receptacle unit 51 plugs into one of the connector portions 46, whereby the front face 52 of the receptacle unit is disposed substantially flush with the outer surface of the side cover 27. For this purpose, the side cover 27 is provided with a substantially rectangular opening 53 for accommodating the receptacle unit, which opening 53 normally has a removable cover portion 54 disposed therein when the receptacle unit is not utilized.

This receptacle unit 51 (Figures 5-9) includes a hollow blocklike housing 56 constructed of a nonconductive material and having at least one outlet portion 57 formed in the front wall 52 thereof. This outlet portion 57, in the illustrated embodiment, comprises two conventional three-hole outlets or socket-type receptacles, each of which is defined in a conventional manner by a pair of vertical slots 58 and 59 and an associated U-shaped ground slot 61 so as to accommodate any conventional two-prong or three-prong plug. While the outlet or receptacle 57 is illustrated in a configuration consistent with standards utilized throughout the United States, it will be recognized that the receptacle or outlet 57 could also have a configuration corresponding to the standard receptacle utilized in other foreign countries such as the European countries.

The housing 56 mounts therein first and second platelike conductive members 62 and 63 for defining the conductive slots 58 and 59, respectively, and a third platelike conductive member 64 for defining the U-shaped ground slot 61.

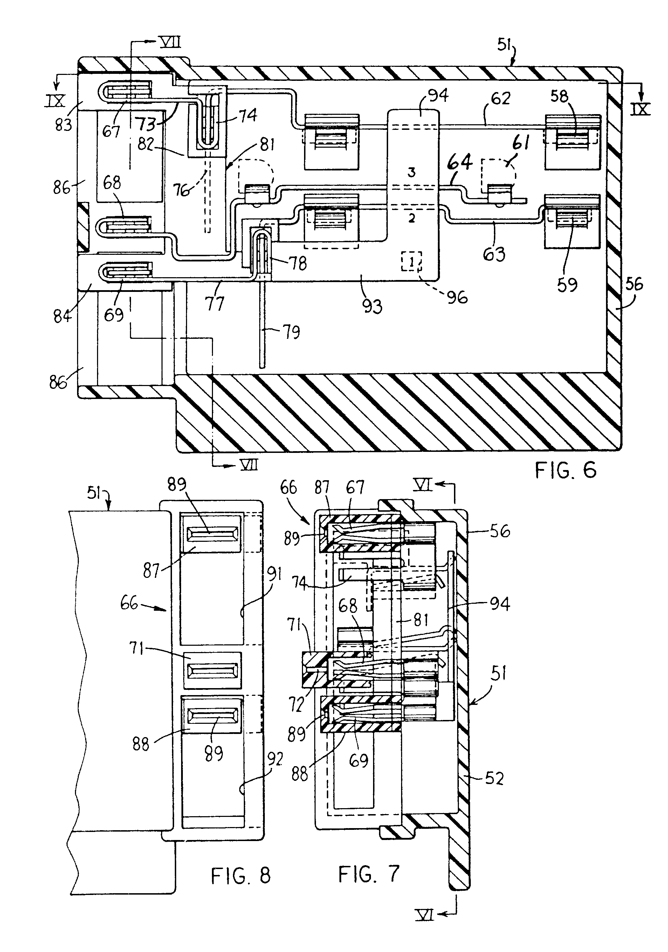

The receptacle unit 51 also has an input connector portion 66 which projects rearwardly therefrom for creating a plug-in electrical connection with the connector portion 46 associated with one of the power blocks. This input connector portion 66 includes three rearwardly projecting pronglike conductive contacts 67-68-69. Each of these contacts 67-68-69 is, as illustrated by Figure 7, preferably formed by a pair of opposed plate portions which are sprung toward one another to hence form a narrow gap which slidingly and conductively receives therein one of the pronglike contacts 47.

The contact 68 is disposed vertically between the contacts 67 and 69 and is formed as an integral part of the ground-defining conductive plate 64. This contact 68 is hence designed for slidable engagement with the contact 47-4 since it defines the "ground" for the electrical system. The ground contact 68 is surrounded by a tubular shroud 71 which projects rearwardly from the housing and has a cross-sectional configuration which enables this shroud 71 to snugly slidably interfit within the shroud 48 associated with the connector portion 47. This shroud 71 is fixed, here integrally, to the housing 56 and has a narrow slot 72 opening inwardly through the rearward free end thereof for permitting insertion of the contact 47-4.

Considering now the contact 67, same is an integral part of a platelike conductive member 73 which has the contact 67 formed on one end thereof, and is provided with a similar contact 74 provided on the other end thereof. This latter contact 74 is also formed by a pair of opposed spring plates which define therebetween a vertically oriented slot in which is slidably accommodated a platelike part 76 which projects downwardly to form a slidable support. Part 76 is integral with the conductive plate 62.

The other contact 69 is similarly formed as part of a conductive plate 77 which also has a further contact 78 formed on the other end thereof, the latter defining a vertical slot in which is slidably accommodated a conductive platelike part 79 which also projects downwardly and is an integral part of the conductive plate 63.

The contacts 67 and 69, and their respective conductive plates 73 and 77, are hence maintained in respective electrical contact with the conductive plates 62 and 63 but are slidably supported for vertical movement relative thereto.

To confine the contacts 67 and 69 for synchronous vertical slidable movement relative to the power-tap housing, there is provided a carrier 81 which is constructed of an insulative material and is confined within the hollow housing 56 for vertical slidable displacement. This carrier 81 has a substantially sidewardly opening channel-shaped configuration and includes a main vertically extending body part 82 which has sidewardly projecting leg portions 83 and 84 adjacent the upper and lower ends thereof. These latter leg portions, adjacent the free ends thereof, are slidably vertically guided within aligned vertical slots 86 which open outwardly through an end wall of the housing 56. Each of these leg portions 83 and 84 has a tubular protective shroud 87 and 88 respectively formed thereon and projecting rearwardly of the power-tap unit. These shrouds 87 and 88 respectively surround the contacts 67 and 69, and each has a slot 89 opening inwardly through the rearward free end thereof for permitting one of the prongs 47 to project therethrough for conductive engagement with the respective contact. These shrouds 87 and 88 project rearwardly of the housing through respective vertically elongated guide slots 91 and 92, which guide slots project vertically on opposite sides of the ground shroud 71 and, in conjunction with the slots 86, slidably vertically confine and guide the carrier 81. Slidable displacement of the carrier causes a corresponding displacement of the contacts 67 and 69, the latter being permitted due to the slidable engagement of the contacts 74 and 78 on the conductive plate parts 76 and 79, respectively.

The carrier 81 also mounts an indicator 93 thereon, the latter being a substantially L-shaped plate which is fixed on the carrier and projects inwardly of the power-tap housing so as to be positioned directly behind the front wall 52. This indicator plate 93 has, as illustrated in Figure 6, a vertically projecting part 94 provided with indicia thereon, such as the numerals "1", "2" and "3" disposed in vertically spaced relation. These indicia are intended to indicate the three electrical circuits provided by the system, and depending upon the vertical position of the carrier 81, one of these indicia is adapted to be disposed directly behind a small window 96 as provided in the front face 52 so as to visually indicate the circuit to which the power-tap is adapted to be connected.

The use and circuit-selecting capability of the receptacle unit 51 will now be briefly described.

Assuming that it is desired to connect the receptacle unit 51 to circuit "1", then the carrier 81 will be slidably moved into the uppermost position illustrated by Figures 6-8. When so positioned, the receptacle unit is then plugged into a respective one of the connector portions 46. To effect this plug-in connection of the power-tap unit to the power block, the shrouds 71, 87 and 88 on the power-tap unit slidably telescope into the shrouds 48 on the connector 46. When in this circuit "1" position, the "live" connector 47-1 engages the contact 67, the "neutral" contact 47-5 engages the contact 69, and the "ground" contact 47-4 engages the contact 68.

Similarly, if circuit "3" is desired, then the carrier 81 is slidably moved downwardly into its lowermost position. In this case, the contacts 47-3 and 47-7 will now respectively engage the contacts 67 and 69, whereas the ground contact 47-4 will still engage the contact 68.

When circuit "2" is desired, the carrier is moved into an intermediate position which is midway between the upper and lower positions described above, and the power-tap is plugged into the power block in the same manner described above, whereupon the contacts 47-2 and 47-6 now respectively engage the contacts 67 and 69.

The shroud 71 associated with the ground contact 68 is, as illustrated by Figure 7, of slightly greater length so as to project outwardly a significant distance beyond the free ends of the shrouds 87 and 88. Hence, the shroud 71 associated with the ground contact is thus utilized to initially position the power-tap unit relative to the connector portion 46, and in fact the tip end of this shroud 71 is slidably inserted into the shroud associated with the ground contact 47-4 so as to initially permit proper positioning of the power-tap during the plugging in thereof to the power block.

With the arrangement of the present invention as described above, both the "live" and "neutral" conductors associated with the power-tap unit can hence be synchronously shifted between three different positions to permit selection of a single circuit associated with the wall system, while at the same time the selected circuit possesses a dedicated "neutral" to avoid generation of undesired noise or interference.

While the invention described above relates specifically to a power-tap unit formed as a receptacle unit, it will be appreciated that this power-tap could also be of other forms, such as a connector for a panel mounted light fixture or other electrical device. In this regard, Figure 5 illustrates a variation of a power-tap 101 having a connector portion 102 associated therewith, which connector portion 102 is constructed identically to that of the connector portion 66 associated with the receptacle unit 51 so that the upper and lower contacts are disposed within shrouds mounted on a common carrier so that the upper and lower contacts can be slidably displaced vertically between three different positions to permit selection between the three circuits. The centermost contact and its shroud are fixedly positioned. This connector portion 102 is adapted to plug into a further connector portion 103 which is formed on the end of the power block, this latter connector portion 103 being identical to the connector portion 46 and having seven contacts which are respectively integrally associated with the conductive plates disposed within the power block. This power-tap 101 has the electrical wires projecting upwardly therefrom so as to extend through one of the rails 12 or 12' for connection to a light fixture, such as fixture 104 (Figure 1).

To supply power to the wall system, a conventional ceiling-type or base feed unit extends from a power monument and plugs into one of the power blocks 16 or 17. If a base feed unit is utilized, then it plugs into one of the connectors 46, whereas a ceiling feed unit will plug into the connector 103. The base or ceiling feed units are obviously seven-contact units so as to be in electrically conductive engagement with the seven conductive plates mounted within the power block. This general arrangement is conventional so that further description thereof is believed unnecessary.

While the preferred embodiment of the invention, as described above, discloses the movable contacts 67 and 69 in slidable engagement with the respective conductor plates 62 and 63, it will be appreciated that other types of connections, such as a hinged or flexing type pivotal connection, could also be utilized so long as the connection permits the necessary vertical displacement of the contacts 67 and 69.

Although a particular preferred embodiment of the invention has been disclosed in detail for illustrative purposes, it will be recognized that variations or modifications of the disclosed apparatus, including the rearrangement of parts, lie within the scope of the present invention.

## Claims

1. A wall panel (11) having fixedly mounted thereon, and disposed between its opposite wall surfaces, an electrical terminal (16 or 17) with a connector portion (46) which includes an array of electrical contacts (47) each connected to a corresponding conductor (21) in electrical cabling in the panel, which cabling includes a plural number of live conductors, a neutral conductor and a ground conductor, and a small portable power-tap unit (51) releasably joined to the connector portion (46) of the terminal (16 or 17) and arranged to receive power, through contacts (89) engageable with contacts (47) of the terminal, from a selected one only of the live conductors and to supply a circuit or device disposed externally of the panel, characterised in that: the cabling includes the said plural number of neutral conductors, each neutral conductor being associated with a respective live conductor; the array of contacts includes, in addition to the live contacts (47-1, 47-2, 47-3) for the live conductors and a ground contact (47-4), the said plural number of neutral contacts (47-5, 47-6, 47-7), one for each neutral conductor; the power-tap unit (51) has, in addition to a ground contact (68), only a single live contact (67) and only a single neutral contact (69); and the live contact (67) and neutral contact (69) are located on an insulating carrier (81) which is displaceable laterally in the power-tap unit (51) when the latter is disengaged from the terminal, the arrangement of the single live and neutral contacts (67, 69) in the carrier (81) in relation to the arrangement of the contacts (47) in the array in the connector portion (46) of the terminal being such that in predetermined positions of the carrier (81) the live and neutral contacts (67, 69) of the power-tap unit (51) register with and engage one selected live contact and the corresponding selected neutral contact respectively in the array in the connector portion when the power-tap unit (51) is joined to the connector portion (46).

2. A wall panel according to claim 1, characterised in that the said plural number is three.

3. A wall panel according to claim 1 or 2, characterised in that the power-tap unit (51) includes a tubular protective shroud (71) surrounding the ground contact (68) and projecting rearwardly of the power-tap unit (51) for piloting engagement with the connector portion (46) when the unit (51) is being plugged into the terminal.

4. A wall panel according to any claims 1 to 3, characterised in that the rear of the power-tap unit has an elongated slot arrangement (91, 92) through which project insulating shrouds (87,88) having the live and neutral contacts (67,69 respectively) mounted therein, the shrouds (87,88) being slidably along the slot arrangement (91,92) during displacement of the carrier (81).

5. A wall panel according to claim 4 as appendant to claim 3, characterised in that the slot arrangement includes a pair of vertically elongated slots (91, 92) disposed vertically on opposite sides of the shroud (71) surrounding the ground contact (68), each of the shrouds (87,88) of the live and neutral contacts projecting through a respective one of the slot (91,92) so that the shroud (71) is situated between the shroudlike portions (87,88).

6. A wall panel according to claim 4, characterised in that each of the live and neutral contacts (67,69) in the power-tap unit (51) is fixedly connected with live and neutral conductive elements (73,77 respectively), mounted on and displaceable with the carrier (81), and live and neutral contact portions (74,78) of the live and neutral conductive elements (73,77 respectively) and are disposed in slidable but electrical engagement with parts (76,79) of live and neutral conductive members (62,63 respectively), fixed in the unit.

**Revendications**

1. Panneau préfabriqué (11) comportant, montée sur lui d'une manière fixe et disposée entre ses faces de paroi opposées, une borne électrique (16 ou 17) pourvue d'une partie formant connecteur (46) qui contient un réseau de contacts électriques (47) respectivement reliés à un conducteur (21) correspondant faisant partie d'un câblage électrique prévu dans le panneau, câblage qui comporte un nombre multiple de conducteurs sous tension, un conducteur neutre et un conducteur de terre, et un petit bloc de prise de courant mobile (51) raccordé d'un manière amovible à la partie formant connecteur (46) de la borne (16 ou 17) et conçu pour, par l'intermédiaire de contacts (89) aptes à être accouplés avec les contacts (47) de la borne, recevoir du courant à partir d'un seul conducteur sous tension sélectionné parmi les conducteurs sous tension et pour alimenter un circuit ou un dispositif disposé à l'extérieur du panneau, caractérisé en ce que : le câblage comporte ledit nombre multiple de conducteurs neutres dont chacun est associé à un conducteur sous tension respectif; le réseau de contacts comporte, en plus des contacts sous tension (47-1, 47-2, 47-3) pour les conducteurs sous tension et d'un contact de terre (47-4), ledit nombre multiple de contacts neutres (47-5, 47-6, 47-7), soit un pour chaque conducteur neutre; le bloc de prise de courant (51) ne possède, en plus d'un contact de terre (68), qu'un contact sous tension (67) unique et qu'un contact neutre (69) unique; et le contact sous tension (67) et le contact neutre (69) sont situés sur un support isolant (81) qui peut être déplacé latéralement dans le bloc de prise de courant (51), lorsque ce dernier est désaccouplé vis-à-vis de la borne, la disposition des contacts sous tension et neutre (67, 69) uniques dans le support (81) par rapport à la disposition des contacts (47) du réseau prévu dans la partie formant connecteur (46) de la borne étant telle que, dans des positions prédéterminées du support (81), les contacts sous tension et neutre (67, 69) du bloc de prise de courant (51) coïncident et s'accouplent respectivement avec un seul contact sous tension sélectionné et avec le contact neutre sélectionné correspondant du réseau de la partie formant connecteur, lorsque le bloc de prise de courant (51) est raccordé à la partie formant connecteur (46).

2. Panneau préfabriqué selon la revendication 1, caractérisé en ce que ledit nombre multiple est égal à trois.

3. Panneau préfabriqué selon la revendication 1 ou 2, caractérisé en ce que le bloc de prise de courant (51) comporte une enveloppe de protection tubulaire (71) qui entoure le contact de terre (68) et qui fait saillie vers l'arrière du bloc de prise de courant (51) en vue de guider un accouplement avec la partie formant connecteur (46), lorsque le bloc (51) est enfiché dans la borne.

4. Panneau préfabriqué selon l'une quelconque des revendications 1 à 3, caractérisé en ce que l'arrière du bloc de prise de courant possède un dispositif de fentes allongées (91, 92) à travers lequel font saillie des enveloppes isolantes (87, 88) qui comportent, montés en elles, les contacts sous tension et neutre (respectivement 67, 69), les enveloppes (87, 88) pouvant coulisser le long du dispositif de fentes (91, 92) pendant un déplacement du support (81).

5. Panneau préfabriqué selon la revendication 4, lorsque celle-ci est dépendante de la revendication 3, caractérisé en ce que le dispositif de fentes comporte deux fentes allongées verticalement (91, 92) disposées verticalement sur des côtés opposés de l'enveloppe (71) qui entoure le contact de terre (68), chacune des enveloppes (87, 88) des contacts sous tension et neutre faisant saillie à travers une fente (91, 92) correspondante, de façon que l'enveloppe (71) soit située entre les parties formant enveloppes (87, 88).

6. Panneau préfabriqué selon la revendication 4, caractérisé en ce que chacun des contacts sous tension et neutre (67, 69) prévus dans le bloc de prise de courant (51) est relié d'une manière fixe à des éléments conducteurs sous tension et neutre (respectivement 73, 77) montés sur le support (81) et aptes à être déplacés avec lui, et à des parties de contact sous tension et neutre (74, 78) des éléments conducteurs sous tension et neutre (respectivement 73, 77) et sont disposés en contact coulissant mais électrique avec des portions (76, 79) d'organes conducteurs sous tension et neutre (respectivement 62, 63) fixés dans le bloc.

**Patentansprüche**

1. Wandtafel (11) mit einem fest darauf montierten und zwischen ihren gegenüberliegenden Wandoberflächen angeordneten elektrischen Anschluß (16 oder 17) mit einem Verbindungsbereich (46), der eine Anordnung von elektrischen Kontakten (47) umfaßt, die jeweils mit einem entsprechenden Leiter (21) in der elektrischen Verkabelung der Tafel verbunden sind, wobei die Verkabelung eine Mehrzahl von stromführenden Leitern, einen neutralen Leiter und einen Erdleiter umfaßt, und mit einer kleinen, tragbaren Stromabgriffseinheit (51), die trennbar mit dem Verbindungsbereich (46) des Anschlusses (16 oder 17) verbunden ist, um durch Kontakte (89), die mit den Kontakten (47) des Anschlusses verbindbar sind, von nur einem ausgewählten der stromführenden Kabel Strom zu erhalten und einen Schaltkreis oder eine Vorrichtung, die außerhalb der Tafel angeordnet ist, zu versorgen, dadurch gekennzeichnet, daß: die Verkabelung die besagte Mehrzahl an neutralen Leitern umfaßt, wobei jeder neutrale Leiter mit einem jeweiligen stromführenden Leiter verbunden ist; die Kontaktanordnung zusätzlich zu den stromführenden Kontakten (47-1, 47-2, 47-3) für die stromführenden Leiter und zu dem Erdkontakt (47-4) die besagte Mehrzahl an neutralen Kontakten (47-5, 47-6, 47-7) für jeden der neutralen Leiter umfaßt; die Stromabgriffseinheit (51) zusätzlich zu einem Erdkontakt (68) nur einen einzigen stromführenden Kontakt (67) und einen einzigen neutralen Kontakt (69) besitzt; und daß der stromführende Kontakt (67) und der neutrale Kontakt (69) auf einem isolierenden Träger (81) angeordnet sind, der lateral in der Stromabgriffseinheit (51) beweglich ist, wenn letztere von dem Anschluß getrennt wird, wobei die Anordnung der einzigen stromführenden und neutralen Kontakte (67, 69) auf dem Träger (81) bezüglich der Anordnung der Kontakte (47) in der Anordnung in dem Verbindungsbereich (46) des Anschlusses derart ist, daß in vorgegebenen Stellungen des Trägers (81) die stromführenden und neutralen Kontakte (67, 69) der Stromabgriffseinheit (51) einem stromführenden Kontakt und dem jeweils entsprechenden, ausgewählten neutralen Kontakt in der Anordnung in dem Anschlußbereich entsprechen und sich mit diesen verbinden, wenn die Stromabgriffseinheit (51) mit dem Anschlußbereich (46) verbunden wird.

2. Wandtafel nach Anspruch 1, dadurch gekennzeichnet, daß die besagte Mehrzahl drei ist.

3. Wandtafel nach Anspruch 1 oder 2, dadurch gekennzeichnet, daß die Stromabgriffseinheit (51) eine röhrenförmige Schutzabdeckung (71) umfaßt, die den Erdkontakt (68) umgibt und nach hinten von der Stromabgriffseinheit (51) vorsteht, um die Verbindung mit dem Verbindungsbereich (46) zu steuern, wenn die Einheit (51) in den Anschluß gesteckt wird.

4. Wandtafel nach einem der Ansprüche 1 bis 3, dadurch gekennzeichnet, daß die Hinterseite der Stromabgriffseinheit eine länglich Schlitzanordnung (91, 92) besitzt, durch die isolierende Abdeckungen (87, 88) mit den darin montierten stromführenden und neutralen Kontakten (67, 69) hervorstehen, wobei die Abdeckungen (87, 88) während der Bewegung des Trägers (81) entlang der Schlitzanordnung (91, 92) gleiten können.

5. Wandtafel nach Anspruch 4 bezogen auf Anspruch 3, dadurch gekennzeichnet, daß die Schlitzanordnung ein Paar von vertikal länglichen Schlitzen (91, 92) umfaßt, die vertikal auf gegenüberliegenden Seiten der den Erdkontakt (68) umgebenden Abdeckung angeordnet sind, wobei jede der Abdeckungen (87, 88) der stromführenden und neutralen Kontakte durch jeweils eine der Schlitze (91, 92) vorsteht, so daß die Abdeckung (71) zwischen den abdeckungsähnlichen Bereichen (87, 88) angeordnet ist.

6. Wandtafel nach Anspruch 4, dadurch gekennzeichnet, daß jeder der stromführenden und neutralen Kontakte (67, 69) in der Stromabgriffseinheit (51) fest mit den stromführenden und neutralen Leiterelementen (73, 77), die auf dem Träger (81) montiert und mit diesem beweglich sind, und mit stromführenden und neutralen Kontaktbereichen (74, 78) der stromführenden und neutralen Leiterelemente (73, 77) verbunden sind und in gleitender aber elektrischer Verbindung mit Teilen (76, 79) von in der Einheit befestigten stromführenden und neutralen Leiterteilen (62, 63) angeordnet sind.

FIG. 1

FIG. 4

EP 0 174 733 B1

FIG. 3

FIG. 2

EP 0 174 733 B1

FIG. 5

FIG. 9

12

FIG. 6

FIG. 8   FIG. 7